(19) Europäisches Patentamt
European Patent Office
Office européen des brevets

(11) **EP 4 557 224 A1**

(12) **EUROPEAN PATENT APPLICATION**
published in accordance with Art. 153(4) EPC

(43) Date of publication:
**21.05.2025 Bulletin 2025/21**

(21) Application number: **23839415.9**

(22) Date of filing: **21.06.2023**

(51) International Patent Classification (IPC):
**G06T 11/60** (2006.01) **G06T 7/00** (2017.01)

(52) Cooperative Patent Classification (CPC):
**G06T 7/00; G06T 11/60**

(86) International application number:
**PCT/JP2023/022882**

(87) International publication number:
**WO 2024/014240 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.07.2022 JP 2022112261**

(71) Applicant: **KONICA MINOLTA, INC.**
**Tokyo 100-7015 (JP)**

(72) Inventor: **MINEGISHI, Natsuko**
**Tokyo 100-7015 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING PROGRAM, INFORMATION PROCESSING DEVICE, AND INFORMATION PROCESSING METHOD**

(57) This invention makes it possible to revise an image to obtain an image suited to a purpose, without losing design characteristics. Input of design characteristics information for the design of an input image is received (step S2). Input of purpose for the input image is received (step S3). The feature value of the input image is analyzed (step S8). Presentation information for causing the design of the input image to approach a design suited to the purpose which maintaining the design characteristics information for the design is determined on the basis of the design characteristics information, the analysis results, and the purpose (step S9). The presentation information is displayed (step S10).

FIG. 5

EP 4 557 224 A1

**Description**

Technical Field

The present invention relates to an information processing program, an information processing device, and an information processing method.

Background Art

In general, images of various designs are used for packages, advertisements, and the like of products, and the impression they give and parts that stand out differ depending on the design. Conventionally, the color arrangement of the design image, the layout of the design, and the like have been determined intuitively between the designer and the orderer so that the design image would achieve the intended effect. However, there is a demand for a system that can objectively evaluate whether a design image meets the intended purpose.

For example, a design evaluation device has been proposed that evaluates whether the material feel of a design image being evaluated matches the target audience, purpose, and desired emotional expression (impression) (see Patent Document 1).

Citation List

Patent Literature

Patent Document 1: JP 2017-91310A

Summary of Invention

Technical Problem

However, when a design image is corrected to suit the target audience, purpose, and desired impression based on the results of the design evaluation of the invention described in Patent Document 1, there are cases where the characteristics of the design (portions that the designer is particular about and does not want to change) that the designer considered to be distinctive features of the design are lost.

The present invention has been made in view of the above-described problem in the related art, and an object of the present invention is to make it possible to correct an image to suit the purpose without losing the characteristics of the design.

Solution to Problem

In order to solve the above-described problem, the invention recited in claim 1 is an information processing program that causes a computer to execute: a design characteristic information input step of receiving an input of design characteristic information on a design of an input image; a purpose input step of receiving an input of a purpose for the input image; an analysis step of analyzing a feature value of the input image; a determination step of determining, based on the design characteristic information, an analysis result in the analysis step, and the purpose, presentation information for bringing the design of the input image closer to a design meeting the purpose while maintaining the design characteristic information; and an output step of outputting the presentation information.

The invention recited in claim 2 is the information processing program according to claim 1, wherein the presentation information includes a suggested correction by a sentence or a corrected design draft.

The invention recited in claim 3 is the information processing program according to claim 1 or 2, wherein the purpose input step includes receiving an input of a desired impression indicating an impression that is desired to be expressed in the design of the input image, and the determination step includes determining the presentation information based on the design characteristic information, the analysis result, and the desired impression.

The invention recited in claim 4 is the information processing program according to claim 3, wherein the analysis step includes outputting an estimated impression obtained by estimating an impression given by the input image from the feature value of the input image as the analysis result based on correspondence information in which an impression given by an image is associated with a feature value of the image.

The invention recited in claim 5 is the information processing program according to claim 4, wherein the determination step includes determining the estimated impression or a matching degree between the estimated impression and the desired impression, and a feature value causing a difference between the estimated impression and the desired impression as the presentation information.

The invention recited in claim 6 is the information processing program according to claim 1 or 2, wherein the purpose input step includes receiving an input of an important region indicating a position of a portion that is desired to be highlighted in the design of the input image, the analysis step includes performing saliency mapping processing of quantifying a degree of saliency for each pixel of the input image, and the determination step includes determining the presentation information based on the design characteristic information, a result of the saliency mapping processing, and the important region.

The invention recited in claim 7 is the information processing program according to claim 6, wherein the analysis step includes, when the important region is a character string constituting a word or a sentence, calculating a ratio of a size of the character string to a size of a character string outside the important region, and the determination step includes, when the calculated ratio is equal to or less than a predetermined value, determining the presentation information that is enlarging the character string in the important region or reducing the character string outside the important region.

The invention recited in claim 8 is an information processing device comprising: design characteristic information input means for receiving an input of design characteristic information on a design of an input image; purpose input means for receiving an input of a purpose for the input image; analysis means for analyzing a feature value of the input image; determination means for determining, based on the design characteristic information, an analysis result by the analysis means, and the purpose, presentation information for bringing the design of the input image closer to a design meeting the purpose while maintaining the design characteristic information; and output means for outputting the presentation information.

The invention recited in claim 9 is an information processing method comprising: a design characteristic information input step of receiving an input of design characteristic information on a design of an input image; a purpose input step of receiving an input of a purpose for the input image; an analysis step of analyzing a feature value of the input image; a determination step of determining, based on the design characteristic information, an analysis result in the analysis step, and the purpose, presentation information for bringing the design of the input image closer to a design meeting the purpose while maintaining the design characteristic information; and an output step of outputting the presentation information.

Advantageous Effects of Invention

According to the present invention, it is possible to correct an image to suit the purpose without losing the characteristics of the design.

Brief Description of Drawings

[FIG. 1] This is a block diagram illustrating a functional configuration of an information processing device according to a first embodiment of the present invention.
[FIG. 2] This is an example of an impression correspondence table.
[FIG. 3] This is a diagram for explaining directions and angles on an image.
[FIG. 4] This is a diagram for explaining pixel values of each pixel constituting an input image.
[FIG. 5] This is a flowchart illustrating a correction portion suggesting process executed by the information processing device.
[FIG. 6] This is a flowchart illustrating the correction portion suggesting process that involves specifying a desired impression.
[FIG. 7] This is an example of an input image.
[FIG. 8] This is an example of an unchanging region specification screen.
[FIG. 9] This is an example of an unchanging feature value specification screen.
[FIG. 10] This is an example of an evaluation region specification screen.
[FIG. 11A] This is an example of a dominant color analysis result screen. [FIG. 11B] This is an example of a complexity analysis result screen. [FIG. 11C] This is an example of a character area ratio analysis result screen.
[FIG. 12] This is an example of an analysis result display screen.
[FIG. 13] This is an example of a present evaluation display screen.
[FIG. 14] This is an example of a change recommendation item display screen.
[FIG. 15] This is an example of an image after correction.
[FIG. 16] This is an example of the analysis result display screen for the image after correction.
[FIG. 17] This is an example of the present evaluation display screen for the image after correction.
[FIG. 18] This is a flowchart illustrating the correction portion suggesting process that involves specifying an important portion according to a second embodiment.

[FIG. 19] This is an example of an input image.
[FIG. 20] This is an example of the unchanging region specification screen.
[FIG. 21] This is an example of the unchanging feature value specification screen.
[FIG. 22] This is an example of a saliency map.
[FIG. 23] This is an example of an important region specification screen.
[FIG. 24] This is an example of the change recommendation item display screen.
[FIG. 25] This is an example of an image after correction.
[FIG. 26] This is an example of the saliency map for the image after correction.
[FIG. 27] This is a flowchart illustrating the correction portion suggesting process in a modification example of the second embodiment.
[FIG. 28] This is an example of correction patterns according to a third embodiment.
[FIG. 29] This is a flowchart illustrating a multiple correction candidates suggesting process according to the third embodiment.

Description of Embodiments

In the following, embodiments of the present invention will be described with reference to the drawings. However, the scope of the invention is not limited to the illustrated examples.

[First Embodiment]

First, a first embodiment of the present invention will be described.

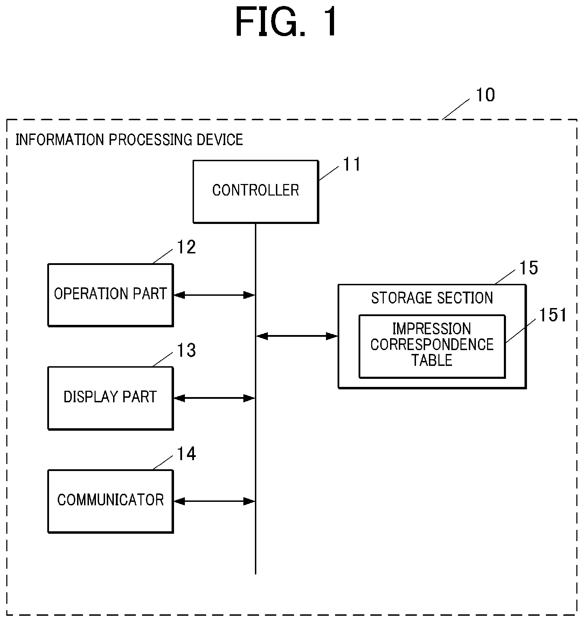

FIG. 1 illustrates a functional configuration of an information processing device 10 according to the first embodiment. As illustrated in FIG. 1, the information processing device 10 includes a controller 11, an operation part 12, a display part 13, a communicator 14, a storage section 15, and the like. Each component is connected by a bus. The information processing device 10 is a computer device such as a personal computer (PC).

The controller 11 includes a central processing unit (CPU), a random-access memory (RAM), and the like, and integrally controls processing operations of each component of the information processing device 10. To be specific, the CPU reads various processing programs stored in the storage section 15, loads the programs into the RAM, and performs various kinds of processing in cooperation with the programs.

The operation part 12 includes a keyboard including cursor keys, character/number input keys, and various function keys, and a pointing device such as a mouse, and outputs, to the controller 11, an operation signal input from the keyboard or mouse. Furthermore, the operation part 12 may include a touch screen laminated on the display part 13, receive a user input to a display screen, and output an operation signal corresponding to the position of the touch operation to the controller 11.

The display part 13 includes a monitor such as a liquid crystal display (LCD) and displays various screens according to instructions of display signals input from the controller 11.

The communicator 14 includes a network interface or the like, and transmits and receives data to and from an external device connected via a communication network such as a local area network (LAN), a wide area network (WAN), or the Internet.

The storage section 15 includes a hard disk drive (HDD) and a nonvolatile semiconductor memory, and stores various processing programs and data necessary for executing the programs.

The storage section 15 stores an impression correspondence table 151 (database). The impression correspondence table 151 is an example of correspondence information in which an impression given by an image is associated with feature values of the image. A feature value of an image is a value indicating a feature of the image. The feature value is obtained from the image or supplementary information on the image.

The impression correspondence table 151 is created in advance by associating, for each of a plurality of sample images, impression words (adjectives, adjective verbs, metaphorical expressions, and the like) with feature values of the sample image. The impression words are obtained by a plurality of test subjects, who are design experts or ordinary people, evaluating impressions of the sample image. The impression words included in the impression correspondence table 151 indicate average impressions of all the test subjects. Note that in a sensory evaluation at the time of creating the impression correspondence table 151, it is desirable to have each test subject evaluate the impressions by randomly presenting a plurality of sample images so that the order of the images at the time of evaluation does not affect the evaluation results.

By referring to the impression correspondence table 151, an impression given by an image can be acquired from the feature values of the image, and a feature value to be included in the image can be acquired from an impression required of the image.

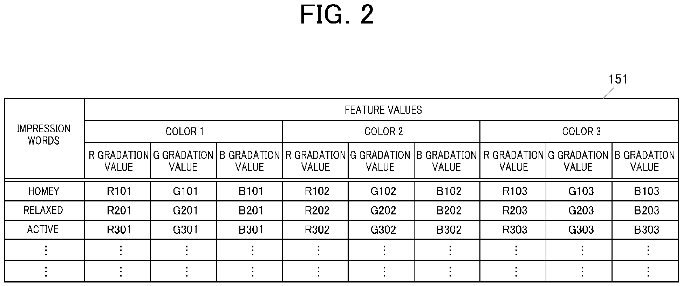

FIG. 2 illustrates an example of the impression correspondence table 151. In the impression correspondence table 151 illustrated in FIG. 2, impression words indicating impressions given by an image are associated with combinations of a plurality of colors (colors 1 to 3) as feature values of the image. Each color is indicated by RGB gradation values.

In the impression correspondence table 151, the feature values of the image associated with each impression word may include a feature value other than the colors.

Here, a case where the impression correspondence table 151 is used will be described. However, a correlation equation created based on a correspondence relationship between impression words of sample images evaluated by a plurality of test subjects and feature values of the sample images may be used as the correspondence information.

Alternatively, as the correspondence information, a machine learning model may be used that is trained for each of a plurality of sample images using feature values of the sample images as input and using impression words of the sample images evaluated by a plurality of test subjects as output. In addition, based on the machine learning result, a feature value corresponding to a specified impression word may be output.

The controller 11 receives an input of design characteristic information on a design of an input image. That is, the controller 11 serves as a design characteristic information input means. The design characteristic information indicates the characteristics of the design including a portion that an operator of the information processing device 10 does not want to change, a portion that the operator considers to be a feature point of the design, and a portion that the operator wants to be particular about.

The controller 11 receives an input of a purpose (a desired impression, a region to be highlighted, or the like) for the input image. That is, the controller 11 serves as a purpose input means. The purpose for the input image is information indicating a goal that a user desires for the input image, and is a goal that the user aims for in order to achieve a desired effect.

Specifically, the controller 11 receives an input of a desired impression indicating an impression desired to be expressed by the design of the input image.

The controller 11 analyzes the feature values of the input image. That is, the controller 11 serves as an analysis means.

For example, based on the correspondence information (the impression correspondence table 151) in which an impression given by an image is associated with feature values of the image, the controller 11 outputs, as an analysis result, an estimated impression obtained by estimating an impression given by the input image from the feature values of the input image. In addition, when a plurality of estimated impressions is obtained, the ratio (%) of each estimated impression may be calculated and included in the analysis result.

Parameters (feature values) used for estimating the estimated impression of the input image include color, luminance, brightness, shape, image complexity, margin ratio, character area ratio (area ratio of a region occupied by characters), jump ratio (size ratio of a character string present in the image), and the like.

For an image having the same size as the entire image, the margin amount or the area of a region occupied by characters may be used as a parameter.

The "color" is a numerical value represented by color information that forms image data. The "color" is represented by, for example, gradation values of R (Red), G (Green), and B (Blue). Other values that represent a color may be used, such as Lab, CMYK, and the like. However, here, a case where a color is represented by the gradation values of R, G, and B will be described.

The "luminance" is, for example, a value obtained by converting R, G, and B data into a luminance value. Furthermore, by estimating an environment in which the image to be analyzed is observed by an observer, coefficients required for the conversion may be determined to calculate the luminance.

The "brightness" is one of color attributes, and a value representing the brightness of an object color.

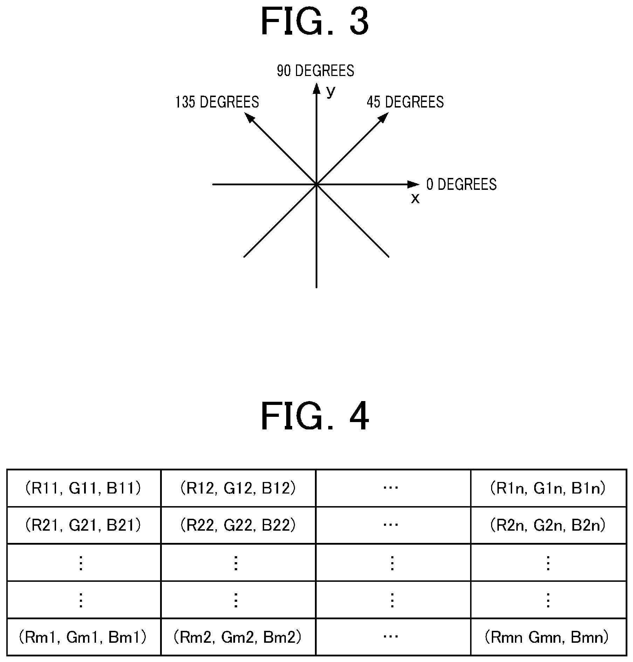

The "shape" is a feature value indicating a shape extracted from the image to be analyzed. Here, as illustrated in FIG. 3, an x-axis (horizontal direction) and a y-axis (vertical direction) are taken with respect to the image and an angle coincident with the x-axis is set to 0 degrees. A feature value indicating whether any one of RGB values of pixels constituting the image is continuously arranged along a direction coincident with 0 degrees, 45 degrees, 90 degrees, or 135 degrees is used as a "shape". For example, after the target image is grayed out and represented only by the luminance distribution, a numerical array of the gradation values of the target image is convoluted with a numerical matrix serving as a Gabor filter matching any one of 0 degrees, 45 degrees, 90 degrees, or 135 degrees, thereby generating an image in which a portion matching the angle is emphasized. The pixel values of the image thus obtained serve as a feature value representing the shape.

The "complexity" is a value representing the degree to which lines that a person recognizes as contours occupy an image. The complexity corresponds to the writing amount of a so-called line drawing or the like. For example, a fractal dimension is calculated based on a box count method with respect to the distribution of the gradation values of the pixels constituting the image data, and the calculated fractal dimension is defined as the complexity. In this case, the minimum value of the complexity is 1, and the complexity has a larger value as the contour lines of the image are more crowded.

The "margin ratio" is a value representing the degree to which a region that a person recognizes as a margin occupies an image. For example, a region recognized as an object in an image is extracted, and the other region is defined as a margin. A region recognized as an object may be extracted from the result of machine learning or by manually specifying the object on the image to be analyzed.

Note that the margin ratio is negatively correlated with the complexity, and it can be determined in some cases that the smaller the complexity, the greater the margin ratio.

The "character area ratio" is the ratio of the area of a region occupied by characters to the area of the entire image.

The "jump ratio (size ratio of a character string)" is the ratio of the size of a character string in the image. Here, a character string consecutively arranged without a line break is extracted as one block, and the area of a region occupied by the extracted block of the character string is defined as the size of the character string.

For example, the jump ratio of a character string having the largest size in one image is set to 100, and the sizes of the other character strings are represented by ratios.

A character string may be extracted from the result of machine learning, or when character data is image data in a file format stored separately from an image, from the data recorded as characters.

Among the parameters for estimating the estimated impression of the input image, a color obtained by averaging the entire input image or a color arrangement pattern may be used as the "color".

The "color obtained by averaging the entire input image" is a color obtained by averaging pixel values (RGB gradation values) of pixels constituting the image. For example, as illustrated in FIG. 4, the averaged color (R, G, B) is obtained by Equations (1) to (3) as follows, where the pixel values of each pixel (m pixels in the vertical direction and n pixels in the horizontal direction) constituting the input image are (Rij, Gij, Bij).

[Expression 1]

$$R = \left( \sum_{i=1}^{m} \sum_{j=1}^{n} Rij \right) / m \cdot n \qquad \ldots \text{Equation (1)}$$

[Expression 2]

$$G = \left( \sum_{i=1}^{m} \sum_{j=1}^{n} Gij \right) / m \cdot n \qquad \ldots \text{Equation (2)}$$

[Expression 3]

$$B = \left( \sum_{i=1}^{m} \sum_{j=1}^{n} Bij \right) / m \cdot n \qquad \ldots \text{Equation (3)}$$

The "color arrangement pattern" is a combination of a plurality of colors (e.g., three colors, five colors, or ten colors) obtained by performing color reduction processing in which similar colors in the input image are made to be the same color.

When the color obtained by averaging the entire input image and the color arrangement pattern are used as parameters for estimating the estimated impression of the input image, impression words are associated with combinations of the color obtained by averaging the entire image and the color arrangement pattern in the correspondence information (impression correspondence table 151).

In the analysis of the input image, the controller 11 calculates the color obtained by averaging the entire input image and extracts the color arrangement pattern from the input image by performing the color reduction processing on the input image. Then, the controller 11 refers to the correspondence information, acquires an impression word corresponding to the color obtained by averaging the entire input image and the color arrangement pattern (which impression word included in the correspondence information is closest to), and sets the impression word as the estimated impression.

As a parameter for estimating the estimated impression of the input image, only one of the color obtained by averaging the entire input image and the color arrangement pattern may be used.

Based on the design characteristic information, the analysis result of the feature values of the input image, and the purpose for the input image, the controller 11 determines presentation information for bringing the design of the input image closer to the purpose while maintaining the design characteristic information on the input image. That is, the controller 11 serves as a determination means.

The presentation information includes a suggested correction by a sentence or a corrected design draft.

Specifically, the controller 11 determines the presentation information based on the design characteristic information, the analysis result (the estimated impression, the feature values, and the like), and the desired impression.

For example, the controller 11 determines, as the presentation information, the estimated impression obtained from the input image or the matching degree between the estimated impression and the desired impression.

Furthermore, the controller 11 determines, as the presentation information, a feature value that causes the difference between the estimated impression and the desired impression. Specifically, the controller 11 refers to the correspondence information stored in the storage section 15, identifies a feature value important for expressing the desired impression, and determines, as the presentation information, which feature value to change so as to bring the estimated impression of the input image closer to the desired impression.

The controller 11 outputs the presentation information. That is, the controller 11 serves as an output means. For example, the controller 11 causes the display part 13 to display the presentation information. Furthermore, the controller 11 may output the presentation information by transmitting the presentation information as data to an external device or recording the presentation information in a recording medium. Further, the controller 11 may print out the presentation information by a printer or the like.

Next, an operation of the information processing device 10 will be described.

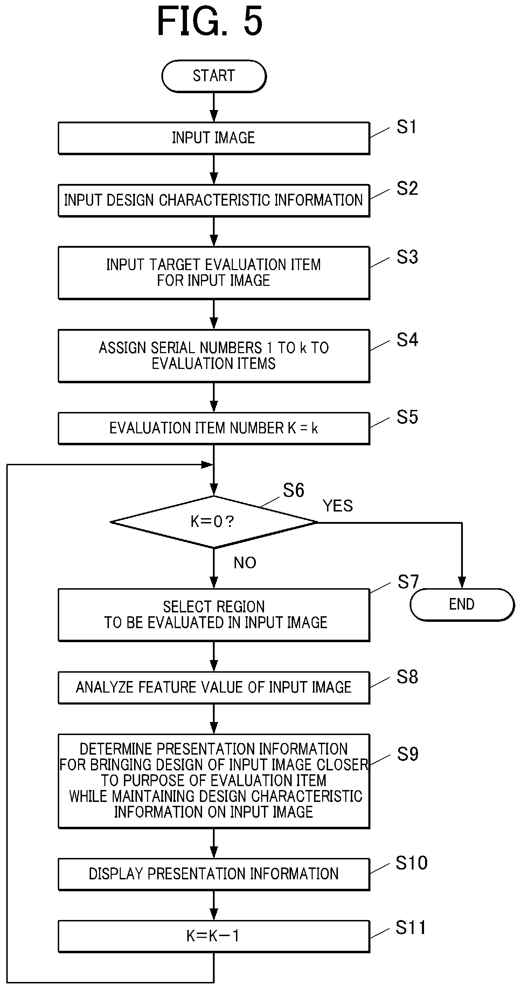

FIG. 5 is a flowchart illustrating a correction portion suggesting process executed by the information processing device 10. This process is implemented by software processing in cooperation with the CPU of the controller 11 and the program stored in the storage section 15.

First, the controller 11 acquires a design image to be processed, which is input via the communicator 14 (step S1).

Next, the controller 11 receives an input of design characteristic information for the design of the input image by an operation of a user via the operation part 12 (step S2). Here, the user is an operator of the information processing device 10, such as a designer or an orderer. For example, the controller 11 causes the display part 13 to display the input image, and receives specification of a region that is not desired to be changed by an operation via the operation part 12. In addition, the controller 11 receives specification of a feature value which is not desired to be changed among feature values of the input image by an operation via the operation part 12.

Next, the controller 11 receives an input of a target evaluation item for the input image by a user operation via the operation part 12 (step S3). For example, the controller 11 receives, as the purpose, specification of an impression to be given to a person (target impression) or a region to be highlighted. A plurality of purposes can be specified. For example, a plurality of target impressions or a plurality of regions to be highlighted can be specified. Alternatively, a target impression and a region to be highlighted can be specified separately.

Next, the controller 11 assigns serial numbers 1 to k to the input evaluation items (purposes) (step S4).

Further, the controller 11 sets the initial value of an evaluation item number K to k (step S5). The evaluation item number K is the number of remaining evaluation items when the input image is evaluated as to whether the image meets the purpose, how to bring the image closer to the purpose, and the like.

Next, the controller 11 determines whether the evaluation item number K is 0, that is, whether the process has been completed for all the evaluation items (step S6).

When the evaluation item number K is not 0 (step S6; NO), that is, when an unprocessed evaluation item remains, the controller 11 displays the input image on the display part 13, and receives selection of a region to be evaluated in the input image for the evaluation item of the number K by an operation via the operation part 12 (step S7).

Next, the controller 11 analyzes the feature values of the input image to be used for evaluation of the evaluation item of the number K (step S8).

Next, based on the design characteristic information, the analysis result of the feature values of the input image, and the purpose for the input image (the evaluation item of the number K), the controller 11 determines presentation information (a suggested correction, the type of feature values to be changed, and/or the like) for bringing the design of the input image closer to the purpose of the evaluation item of the number K while maintaining the design characteristic information on the input image (without changing the design characteristic information) (step S9).

The presentation information includes, for example, information indicating content of correction/improvement to the input image described by a sentence, an image obtained by correcting/improving the input image, and the like.

Next, the controller 11 causes the display part 13 to display the determined presentation information (step S10).

Next, the controller 11 subtracts 1 from the value of the evaluation item number K to set a new evaluation item number K (step S11), and returns the process to step S6 to repeat the processing.

In step S6, when the evaluation item number K is 0 (YES in step S6), that is, when there is no more unprocessed evaluation item, the controller 11 ends the correction portion suggesting process.

Next, a more specific correction portion suggesting process will be described.

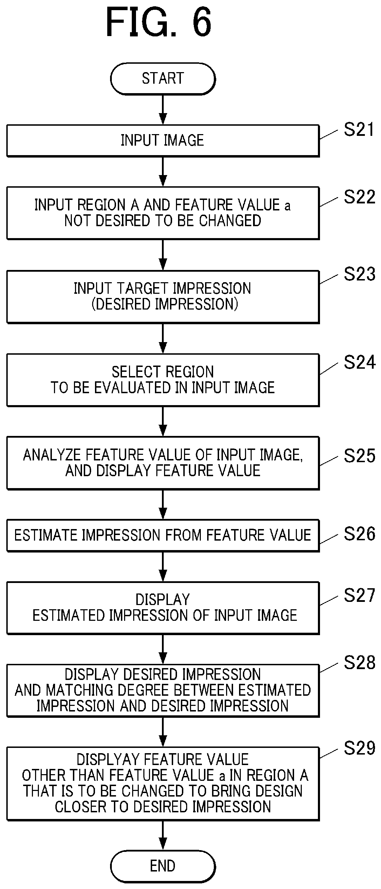

FIG. 6 is a flowchart illustrating the correction portion suggesting process that involves specifying a desired impression, which is executed by the information processing device 10. This process is implemented by software processing in cooperation with the CPU of the controller 11 and the program stored in the storage section 15.

First, the controller 11 acquires a design image to be processed, which is input via the communicator 14 (step S21).

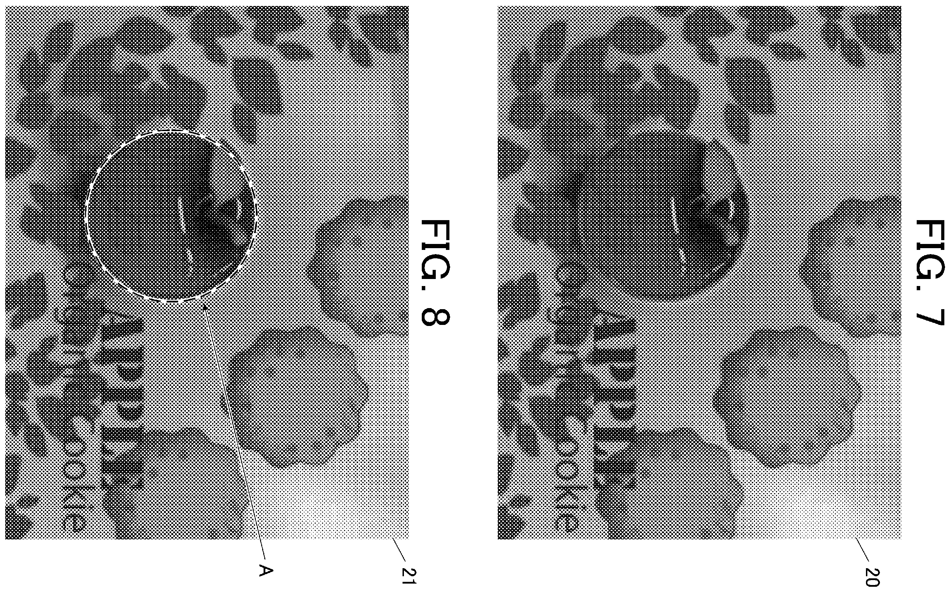

FIG. 7 illustrates an example of the input image 20. In this case, a package design of confectionaries made with apples is the processing target.

Next, the controller 11 receives an input of a region A that the user does not want to change in the input image and a feature value a that the user does not want to change in the region A by a user operation via the operation part 12 (step S22). That is, the region A that is not desired to be changed and the feature value a that is not desired to be changed correspond to the design characteristic information.

For example, the controller 11 causes the display part 13 to display the input image, and receives specification of the region A that is not desired to be changed by an operation via the operation part 12.

FIG. 8 illustrates an example of an unchanging region specification screen 21 displayed on the display part 13. On the unchanging region specification screen 21, an apple (a region surrounded by a broken line) is specified as the region A that is not desired to be changed in the input image.

In addition, the controller 11 causes the display part 13 to display a plurality of feature values, and receives specification of a feature value a that is not desired to be changed among the feature values of the input image by an operation via the operation part 12.

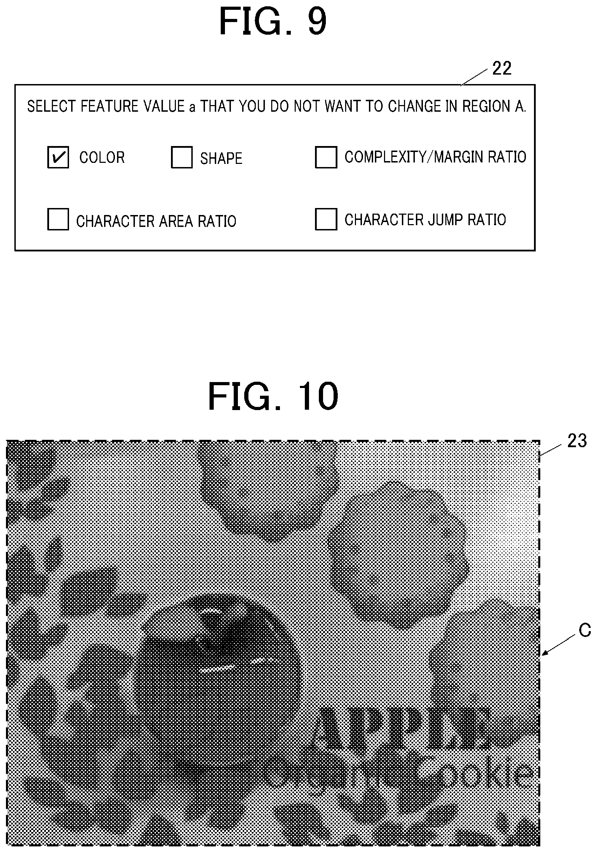

FIG. 9 illustrates an example of an unchanging feature value specification screen 22 displayed on the display part 13. On the unchanging feature value specification screen 22, the "color" is specified as the feature value a that is not desired to be changed in the region A.

Note that only one of the region A that is not desired to be changed and the feature value a that is not desired to be changed may be specified.

Next, the controller 11 receives an input of a target impression (desired impression) for the input image as a purpose of the input image by a user operation via the operation part 12 (step S23). For example, the controller 11 causes the display part 13 to display a plurality of impression words such as "homey", "relaxed", and "active" as options, and receives specification of a desired impression by an operation via the operation part 12.

Next, the controller 11 causes the display part 13 to display the input image, and receives selection of a region to be evaluated in the input image by an operation via the operation part 12 (step S24).

FIG. 10 illustrates an example of an evaluation region specification screen 23 displayed on the display part 13. On the evaluation region specification screen 23, the entire image (region surrounded by a broken line) is specified as a region C to be evaluated in the input image.

Next, the controller 11 analyzes the feature values of the input image and causes the display part 13 to display the feature values obtained by the analysis (step S25). For example, the controller 11 obtains the dominant color (color arrangement pattern), complexity, and character area ratio as the feature values of the input image.

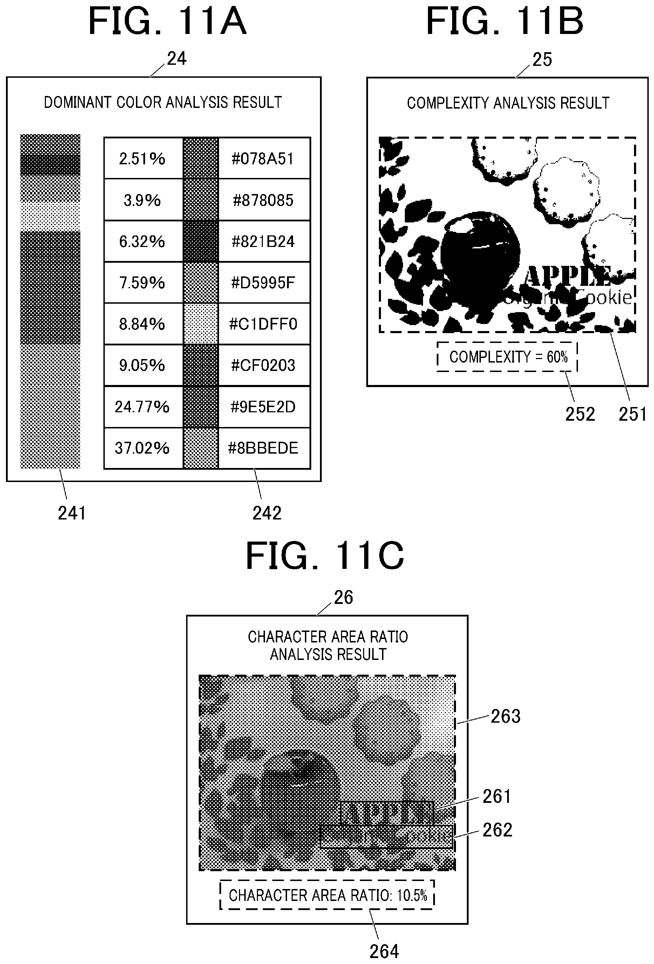

FIG. 11A illustrates an example of a dominant color analysis result screen 24 displayed on the display part 13. The controller 11 performs the color reduction processing for grouping similar colors into the same color for each pixel that constitutes the input image, and obtains the ratio (area ratio) of each of the grouped colors in the image. The dominant color analysis result screen 24 includes a stacked bar graph 241 indicating the area ratio of each color after the color reduction processing, and a correspondence table 242 indicating the correspondence between the area ratio of each color after the color reduction processing and the name of the color.

FIG. 11B illustrates an example of a complexity analysis result screen 25 displayed on the display part 13. The controller 11 calculates the complexity by, for example, extracting contours from the input image. The complexity analysis result screen 25 includes a processing image 251 and a complexity 252. The processing image 251 is generated when the complexity of the input image is calculated.

FIG. 11C illustrates an example of a character area ratio analysis result screen 26 displayed on the display part 13. The controller 11 extracts a character region from the input image and calculates the ratio of the character region to the entire image (character area ratio). The character area ratio analysis result screen 26 includes an input image 263 in which character regions 261 and 262 are shown, and a character area ratio 264.

Next, the controller 11 estimates an estimated impression of the input image from the feature values (step S26). Specifically, the controller 11 refers to the impression correspondence table 151 stored in the storage section 15, acquires an impression word corresponding to the dominant color, the complexity, and the character area ratio, and sets the impression word as an estimated impression. Note that as the correspondence information, a correlation formula or a machine learning model may be used instead of the impression correspondence table 151.

Next, the controller 11 causes the display part 13 to display the estimated impression of the input image (step S27).

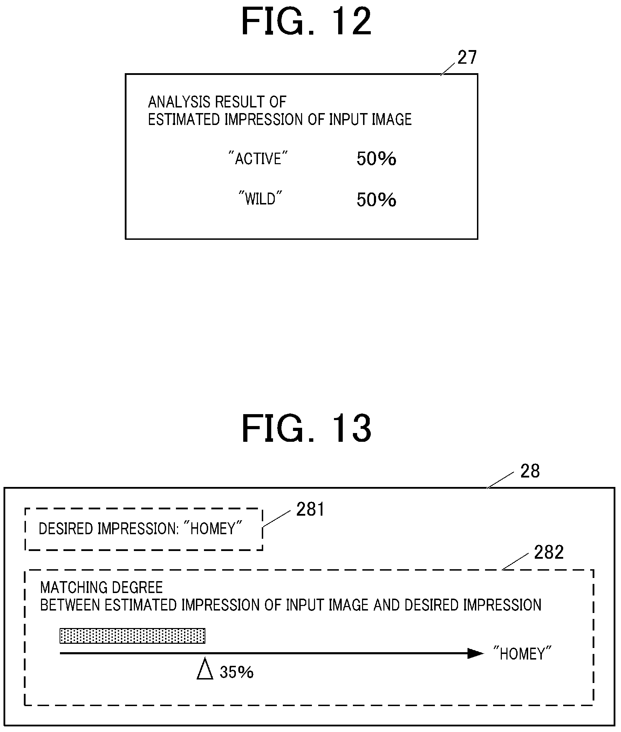

FIG. 12 illustrates an example of an analysis result display screen 27 displayed on the display part 13. On the analysis result display screen 27, an impression of "active" (50%) and an impression of "wild" (50%) are displayed as the estimated impressions estimated from the input image.

Next, the controller 11 causes the display part 13 to display the desired impression and the matching degree between the estimated impression and the desired impression (step S28). In this step, a value indicating the gap between the estimated impression and the desired impression may be displayed instead of the matching degree between the estimated impression and the desired impression.

FIG. 13 illustrates an example of a present evaluation display screen 28 displayed on the display part 13. The desired impression 281 of "homey" and the matching degree 282 (35%) between the estimated impression estimated from the input image and the desired impression are displayed on the present evaluation display screen 28.

Next, the controller 11 determines, as presentation information, a feature value other than the feature value a of the region A that is to be changed in order to bring the design of the input image closer to the desired impression, and causes the display part 13 to display the feature value (step S29). Specifically, based on the impression correspondence table 151 in which impression words are associated with feature values, the controller 11 presents a parameter that is recommended to be changed in order to fill the gap between the estimated impression of the input image and the desired impression.

A feature value other than the feature value a can be a parameter that is recommended to be changed if the feature value contributes to realizing the desired impression. On the other hand, the feature value a can be adopted only for a region other than the region A as a parameter that contributes to realizing the desired impression.

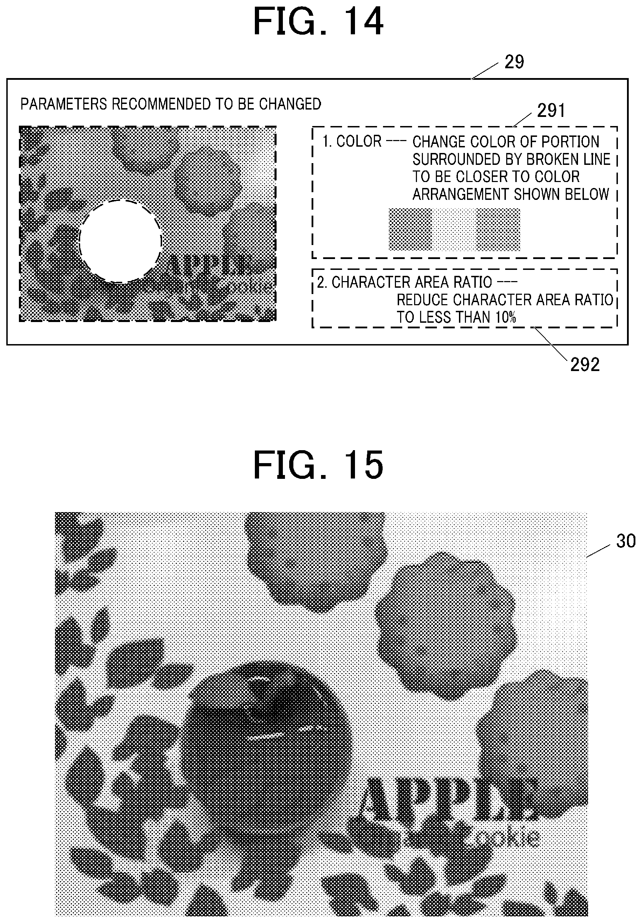

FIG. 14 illustrates an example of a change recommendation item display screen 29 displayed on the display part 13. On the change recommendation item display screen 29, the presentation information 291 and 292 for bringing the impression closer to the desired impression and a target region 293 targeted by the presentation information 291 are displayed.

The target region 293 is a region (portion surrounded by a broken line) obtained by excluding an apple (region A) from the entire input image.

The presentation information 291 includes, for the parameter "color" recommended to be changed, a suggested correction of bringing the color of the target region 293 closer to the color arrangement indicated by a color arrangement pattern of three colors. This color arrangement pattern is a combination of colors corresponding to the desired impression.

The presentation information 292 includes a suggested correction of reducing the parameter "character area ratio", which is recommended to be changed, to less than 10%.

Then, the controller 11 ends the correction portion suggesting process that involves specifying a desired impression.

Thereafter, the user changes each parameter (the color and the character area ratio) for the input image with reference to the above-described processing results by an operation via the operation part 12 to correct the input image.

FIG. 15 illustrates an example of the image after correction 30. As compared with the input image 20 (see FIG. 7), in the image after correction 30, the color of the region other than the region A (the apple) has been changed to be closer to the "desired impression", and the size of the characters "Organic Cookie" has been reduced (the character areal ratio reduced).

When the user instructs reevaluation of the image after correction by an operation via the operation part 12, the controller 11 performs the processing of steps S25 to S28 of the correction portion suggesting process (see FIG. 6) that involves specification of a desired impression on the image after correction, and causes the display part 13 to display the processing results.

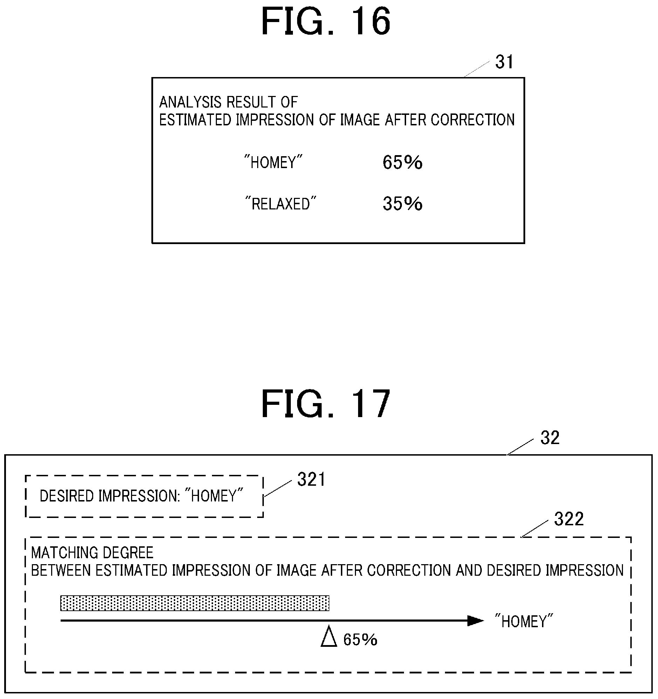

FIG. 16 illustrates an example of the analysis result display screen 31 displayed on the display part 13. An impression of "homey" (65%) and an impression of "relaxed" (35%) are displayed on the analysis result display screen 31 as estimated impressions estimated from the image after correction.

FIG. 17 illustrates an example of the present evaluation display screen 32 displayed on the display part 13. The present evaluation display screen 32 displays the desired impression 321 of "homey" and the matching degree 322 of "65%" between the estimated impression estimated from the image after correction and the desired impression.

As described above, according to the first embodiment, by inputting a purpose related to a correction of the design, it is possible to output presentation information that contributes to creating a new design in consideration of the characteristics of the design (the portions that the designer is particular about, which represents the individuality of the designer). Since the information processing device 10 outputs the presentation information for bringing the design of the input image closer to the purpose while maintaining the design characteristic information on the input image, the user can correct the design to suit the purpose while making use of characteristic portions that express the individuality of the designer. Therefore, it is possible to correct the image to suit the purpose without losing the characteristics of the design.

In addition, this makes it possible to preserve the results of the designer's free imagination, thereby not hindering the emergence or development of unprecedented, innovative designs.

In addition, since the presentation information includes a suggested correction by a sentence or a corrected design draft, the user can correct the design of the input image to suit the purpose with reference to the presentation information.

In addition, by inputting a desired impression indicating an impression desired to be expressed by a design as a purpose, it is possible to output presentation information for bringing the design of the input image closer to the desired impression without changing the design characteristics of the input image.

In addition, by outputting an estimated impression given by the input image from the feature values of the input image based on the correspondence information in which an impression given by the image is associated with feature values of the image , it is possible to use the present impression with respect to the input image to correct the design.

In addition, by determining and outputting an estimated impression and the matching degree between the estimated impression and the desired impression as presentation information, it is possible to present, to the user, the present impression with respect to the input image and the degree of achievement of the desired impression at the present moment.

In addition, it is possible to present a feature value to be changed to the user by determining and outputting a feature value causing the difference between the estimated impression and the desired impression as presentation information.

Note that in the correction portion suggesting process that involves specification of the desired impression illustrated in FIG. 6, an estimated impression, a desired impression, and the matching degree between the estimated impression and the desired impression are displayed, but whether to display each piece of information may be changed as appropriate.

[Second Embodiment]

Next, a second embodiment to which the present invention is applied will be described.

Since an information processing device according to the second embodiment has the same configuration as the information processing device 10 according to the first embodiment, FIG. 1 is also used, and illustration and description of the configuration are omitted. Hereinafter, configurations and processes characteristic of the second embodiment will be described.

In the second embodiment, a case where presentation information for highlighting a specified portion is output will be described.

The controller 11 of the information processing device 10 receives an input of an important region indicating the position of a portion to be highlighted in the design of the input image.

The controller 11 performs saliency mapping processing of quantifying the degree of conspicuity (i.e., saliency) for each pixel of the input image.

The saliency mapping processing is image processing in which each pixel included in an image is represented by a value indicating the saliency of that pixel. Specifically, in the saliency mapping processing, a portion having color contrast in each of the red-green direction and the yellow-blue direction, a portion having luminance contrast, and a portion having a linear component (edge) matching a predetermined direction (e.g., a direction from 0 degrees to 315 degrees in increments of 45 degrees with angles taken as in FIG. 3) are each indicated by a high numerical value as a portion having high saliency (easily recognizable portion).

The presence of the color contrast in the red-green direction corresponds to, for example, the difference in value indicating color in the red-green direction between adjacent pixels being equal to or greater than a predetermined value.

The presence of the color contrast in the yellow-blue direction corresponds to, for example, the difference in value indicating color in the yellow-blue direction between adjacent pixels being equal to or greater than a predetermined value.

The presence of luminance contrast corresponds to, for example, the difference in value indicating luminance between adjacent pixels being equal to or greater than a predetermined value.

Further, among the angles indicating a predetermined direction, 0 degrees and 180 degrees (horizontal), 45 degrees and 225 degrees (upward diagonal to the right), 90 degrees and 270 degrees (vertical), and 135 degrees and 315 degrees (downward diagonal to the right), each correspond to a linear component in the same direction.

Based on the design characteristic information, the result of the saliency mapping processing, and the important region, the controller 11 determines presentation information for highlighting the important region of the input image while maintaining the design characteristic information on the input image.

Specifically, in order to increase the saliency of the important region, the controller 11 determines the presentation information that is increasing the contrast in each of the red-green, yellow-blue, and luminance directions in the important region or adding, to the important region, a linear component that matches the direction component of a predetermined direction (every 45 degrees).

For example, when the "color" of the region of an "apple" in the input image is specified as design characteristic information (region/feature value not desired to be changed) and the region of the "apple" is specified as an important region (portion desired to be highlighted), in order to highlight the apple, which is colored in red, it is conceivable to increase the color contrast in the red-green direction between the region of the apple and its surroundings by making the background of the apple green. Alternatively, the luminance contrast between the region of the apple and its surroundings may be increased by brightening or darkening the background of the apple.

Next, an operation will be described.

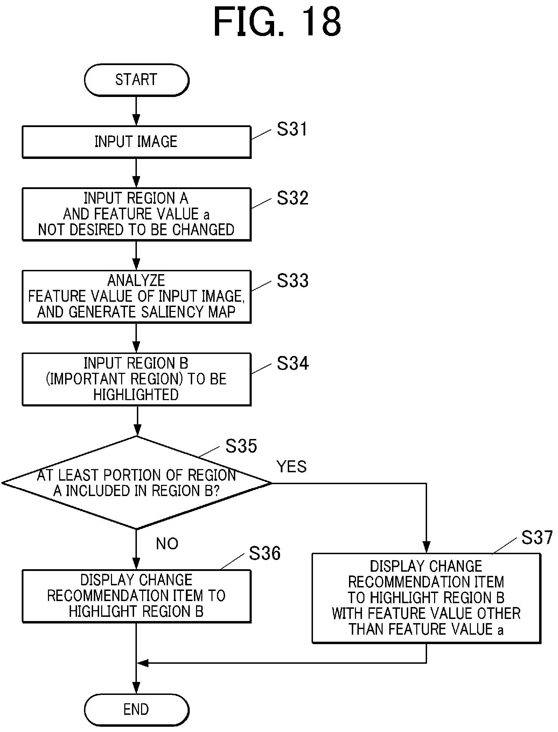

FIG. 18 is a flowchart illustrating the correction portion suggesting process that involves specifying an important portion, which is executed by the information processing device 10 according to the second embodiment. This process is implemented by software processing in cooperation with the CPU of the controller 11 and the program stored in the storage section 15.

The processes in step S31 and step S32 are the same as the processes in step S21 and step S22 of the correction portion suggesting process (see FIG. 6) involving specification of a desired impression, and thus a description thereof is omitted.

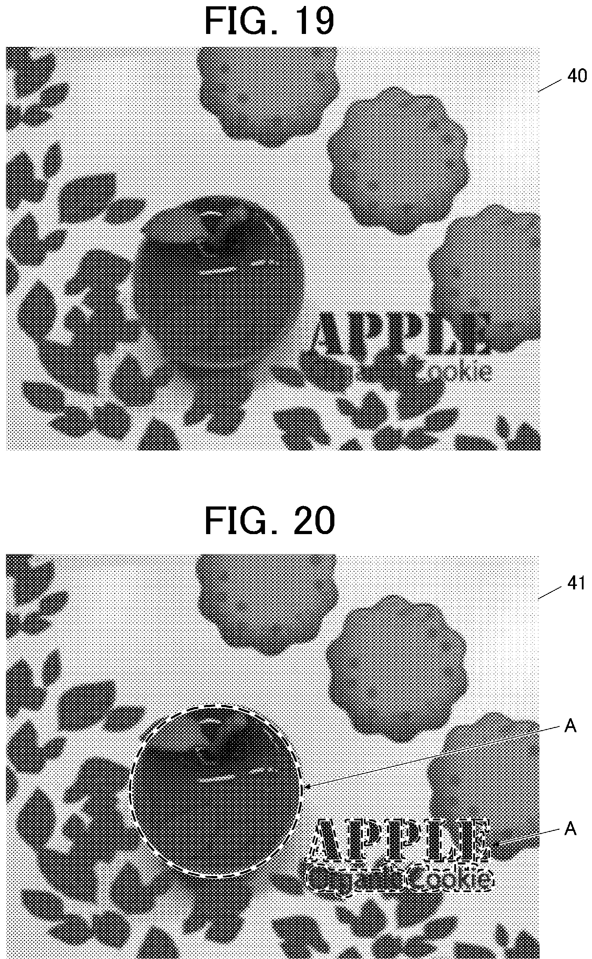

FIG. 19 illustrates an example of an input image 40 input in step S31.

FIG. 20 illustrates an example of the unchanging region specification screen 41 displayed on the display part 13 in step S32. On the unchanging region specification screen 41, an apple and a text portion are specified as the region A that is not desired to be changed on the input image.

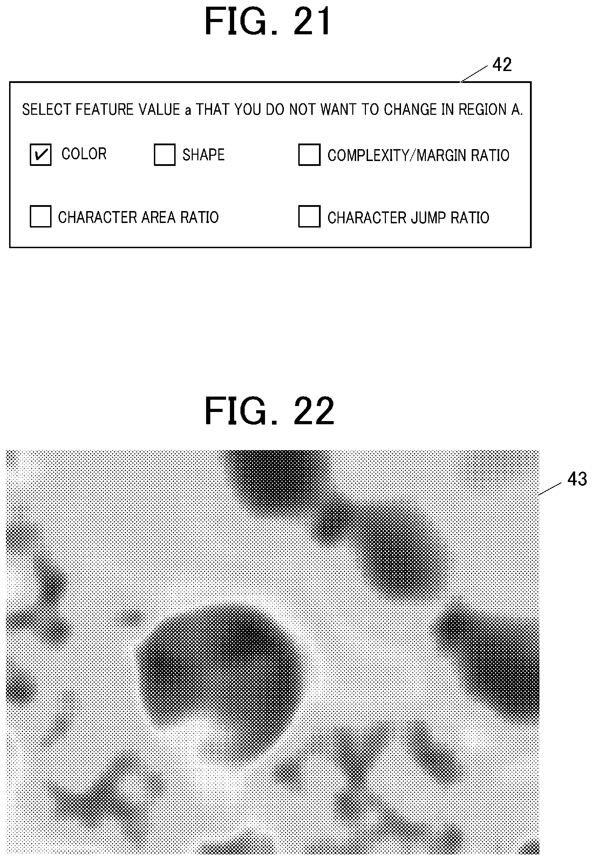

FIG. 21 illustrates an example of the unchanging feature value specification screen 42 displayed on the display part 13 in step S32. On the unchanging feature value specification screen 42, the "color" is specified as the feature value a that is not desired to be changed in the region A.

Next, the controller 11 analyzes the feature values (color contrast, luminance contrast, linear components, and the like) of the input image, generates a saliency map from the feature values, and causes the display part 13 to display the saliency map (step S33).

FIG. 22 illustrates an example of the saliency map 43 displayed on the display part 13. The saliency map 43 expresses each pixel with a color or a density corresponding to the degree of saliency (attentiveness or conspicuity). For example, a portion having high saliency is displayed in red. Note that it is possible to arbitrarily set which color is assigned to which degree of saliency.

Next, the controller 11 receives an input of a region B (important region) to be highlighted in the input image as a purpose for the input image by a user operation via the operation part 12 (step S34).

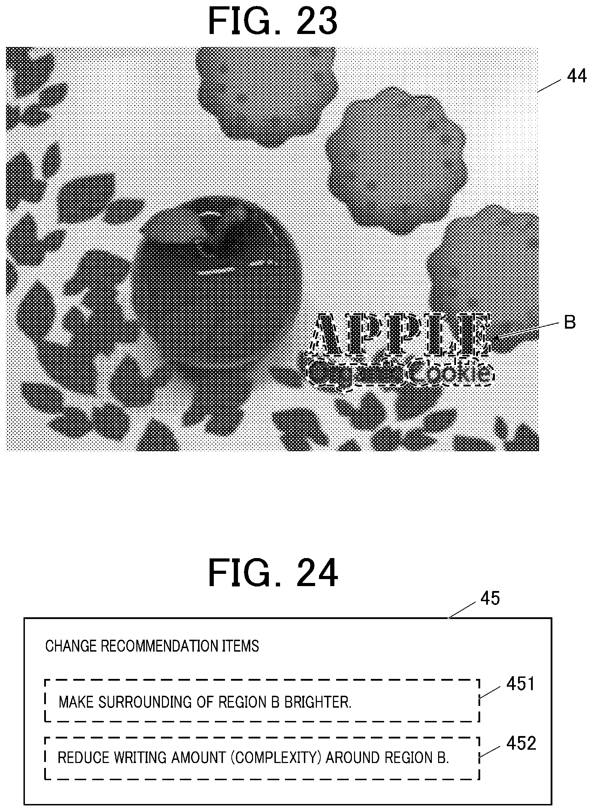

FIG. 23 illustrates an example of an important region specification screen 44 displayed on the display part 13. On the important region specification screen 44, a text portion is specified as the region B to be highlighted on the input image. Note that the important region specification screen 44 and the saliency map 43 may be displayed side by side so that the user can specify the region B to be highlighted on the important region specification screen 44 while referring to the present saliency in the saliency map 43.

Next, the controller 11 determines whether at least a portion of the region A (region that the user does not want to change) is included in the region B (important region) (step S35).

If at least a portion of the region A is not included in the region B (NO in step S35), that is, if there is no overlapping portion between the region B and the region A, the controller 11 determines, as presentation information, a change recommendation item that highlights the region B, and causes the display part 13 to display the change recommendation item (step S36).

In step S35, if at least a portion of the region A is included in the region B (step S35; YES), the controller 11 determines, as presentation information, a change recommendation item that highlights the region B with a feature value other than the feature value a, and causes the display part 13 to display the change recommendation item (step S37).

FIG. 24 shows an example of the change recommendation item display screen 45 displayed on the display part 13. On the change recommendation item display screen 45, presentation information 451 and 452 for highlighting the region B are displayed.

The presentation information 451 includes a suggested correction of highlighting the region B by changing the color of the surrounding of the region B to a brighter color to increase the difference in brightness (luminance) between the region B and the surrounding region.

The presentation information 452 includes a suggested correction of highlighting the region B by reducing the writing amount (complexity) around the region B.

After step S36 or step 37, the controller 11 ends the correction portion suggesting process that involves specifying an important portion.

Thereafter, the user changes each parameter (the color of the surrounding of the region B and the degree of complexity) for the input image with reference to the above-described processing results by an operation via the operation part 12 to correct the input image.

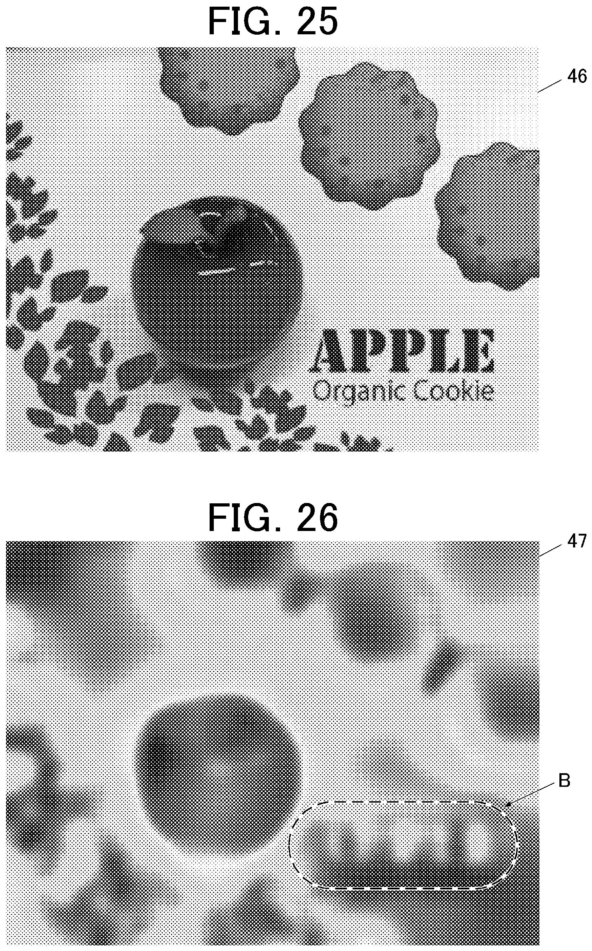

FIG. 25 illustrates an example of the image after correction 46. In the image after correction 46, the design (leaves and cookies) in the background portion has been removed (the writing amount reduced) from the surrounding of the text portion (region B). As a result, the surrounding of the text portion has become brighter. As a result, the text portion is highlighted more in the image after correction 46 than in the input image 40 (refer to FIG. 19).

When the user instructs the saliency mapping processing to the image after correction by an operation via the operation part 12, the controller 11 performs the saliency mapping processing to the image after correction, and causes the display part 13 to display the processing result.

FIG. 26 illustrates the saliency map 47 for the image after correction.

In the saliency map 43 (refer to FIG. 22) for the image before correction, the saliency of the region B (text portion) itself was low and the surrounding region was more salient, and it was expected that attention would not be directed to the text.

On the other hand, as illustrated in FIG. 26, after the correction, the region B (text portion) has exhibited higher saliency than before the correction, and the saliency around the region B has decreased, making the region B stand out.

From such a reevaluation result, the user can confirm that the saliency of the region B (text portion) has increased in the image after correction.

In order to make it easier to see a change before and after the correction, the saliency map 43 before correction illustrated in FIG. 22 and the saliency map 47 after correction illustrated in FIG. 26 may be displayed side by side.

As described above, according to the second embodiment, similarly to the first embodiment, it is possible to correct an image to suit a purpose without losing the characteristics of the design.

Furthermore, by inputting an important region indicating the position of a portion that is desired to be highlighted as a purpose, it is possible to output presentation information for highlighting the important region of the input image without changing the design characteristics of the input image.

In addition, by quantifying the degree of saliency for each pixel of the input image by the saliency mapping processing, it is possible to grasp the present situation, i.e., where in the input image is salient, and also to determine how and where to correct so that the important region becomes salient.

Note that the presentation information for increasing the saliency of the important region may be presented only when a value (pixel values in the saliency map) quantitatively indicating the saliency of the important region specified as a region to be highlighted is equal to or smaller than a predetermined value. That is, when the important region is already conspicuous to a certain extent, the determination and output of the presentation information can be omitted.

In addition, in the second embodiment, the case where the saliency mapping processing is used as a method of quantitatively analyzing the saliency in the input image has been described. However, the saliency mapping processing may be replaced with processing based on another theory or algorithm as long as the processing is image processing of quantitatively indicating a portion which is felt to be conspicuous by an observer of the image.

Even when the saliency mapping processing is replaced with processing based on another theory or algorithm, it is suggested that in order to increase the saliency of the important region, the contrast in each of the red-green, yellow-blue and luminance directions may be increased, or a linear component that matches the direction component every 45 degrees (vertical, horizontal, or diagonal) may be added to the important region.

[Modification Example]

Next, a modification example of the second embodiment will be described. Here, portions different from the second embodiment will be described.

When the important region is a character string constituting a word or a sentence, the controller 11 of the information processing device 10 calculates the ratio of the size of the character string in the important region to the size of a character string outside the important region.

If the calculated ratio is less than or equal to a predetermined value, the controller 11 determines presentation information that is enlarging the character string in the important region or reducing the character string outside the important region.

Here, the ratio of the "size of the character string in the important region" to the "size of the character string outside the important region" is referred to as the jump ratio.

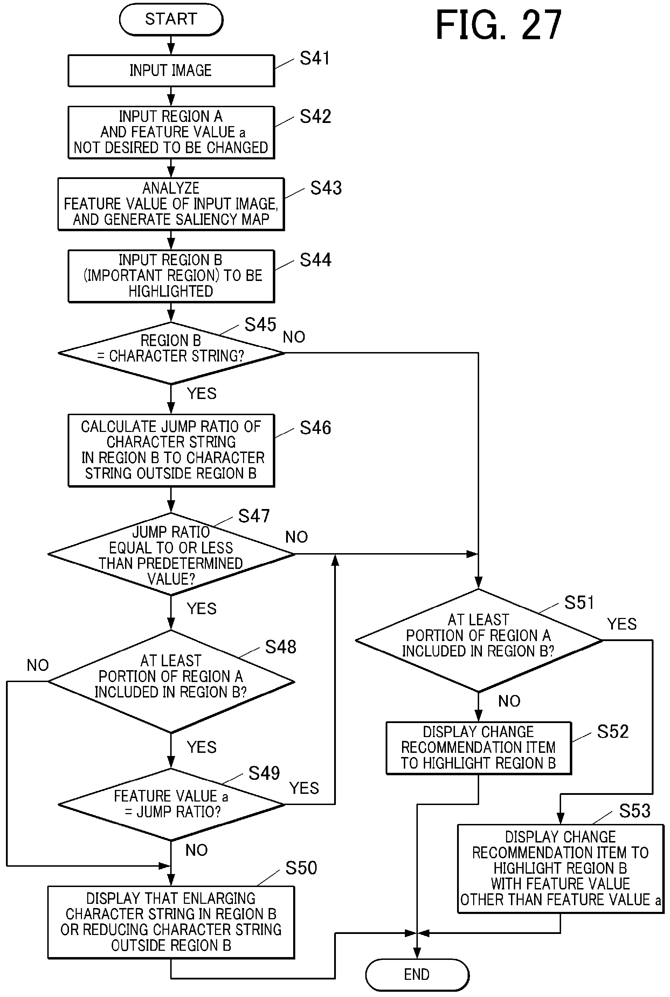

FIG. 27 is a flowchart illustrating the correction portion suggesting process in the modification example. This process is implemented by software processing in cooperation with the CPU of the controller 11 and the program stored in the storage section 15.

The processes in steps S41 to S44 are the same as the processes in steps S31 to S34 of the correction portion suggesting process (see FIG. 18) involving specification of an important region, and thus a description thereof is omitted.

Next, the controller 11 determines whether the region B to be highlighted (important region) is a character string constituting a word or a sentence (step S45).

If the region B is a character string (YES in step S45), the controller 11 calculates the ratio (jump ratio) of the size of the character string in the region B to the size of the character string outside the region B (step S46).

Next, the controller 11 determines whether the calculated jump ratio is less than or equal to a predetermined value (step S47).

If the jump ratio is less than or equal to the predetermined value (step S47; YES), the controller 11 determines whether at least a portion of the region A (region that the user does not want to change) is included in the region B (step S48).

If at least a portion of the region A is included in the region B (step S48; YES), the controller 11 determines whether the feature value a (feature value that the user does not want to change) is the jump ratio (step S49).

If at least a portion of the region A is not included in the region B in step S48 (step S48; NO), or if the feature value a is not the jump ratio in step S49 (step S49; NO), the controller 11 determines presentation information that is enlarging the character string in the region B or reducing the character string outside the region B, and causes the display part 13 to display the information (step S50).

If the region B is not a character string in step S45 (step S45; NO), if the jump ratio is greater than a predetermined value in step S47 (step S47; NO), or if the feature value a is the jump ratio in step S49 (step S49; YES), the controller 11 proceeds the process to step S51.

The processes in steps S51 to S53 are the same as the processes in steps S35 to S37 of the correction portion suggesting process (see FIG. 18) involving specification of an important region, and thus a description thereof is omitted.

After step S50, step S52, or step S53, the controller 11 ends the correction portion suggesting process according to the modification example.

According to the modification example, when the important region is a character string, when the ratio of the size of the character string to the size of a character string outside the important region is equal to or less than a predetermined value, it is possible to determine and output presentation information that is enlarging the character string in the important region or reducing the character string outside the important region. Therefore, when the important region is a character string, a simple and easy-to-understand correction method of changing the size of a character string can be adopted.

[Third Embodiment]

Next, a third embodiment to which the present invention is applied will be described.

Since an information processing device according to the third embodiment has the same configuration as the information processing device 10 according to the first embodiment, FIG. 1 is also used, and illustration and description of the configuration are omitted. Hereinafter, configurations and processes characteristic of the third embodiment will be described.

In the third embodiment, an input image is automatically corrected by a plurality of mutually different correction methods (correction patterns) based on a desired impression or an important region specified by the user, and a plurality of images after correction are presented as options.

Based on the design characteristic information, the analysis result of the feature values of the input image, and the purpose for the input image, the controller 11 of the information processing device 10 determines presentation information for bringing the design of the input image closer to the purpose while maintaining the design characteristic information on the input image.

The controller 11 generates a plurality of images (corrected design drafts) by performing corrections so as to bring the design of the input image closer to the purpose while maintaining the design characteristic information on the input image. For example, the controller 11 automatically performs, according to a plurality of correction patterns, corrections for bringing the input image closer to a desired impression, for highlighting an important region of the input image, or for achieving both.

The controller 11 presents the plurality of images after correction as the presentation information on the display part 13, and allows the user to select a correction pattern to be applied. The controller 11 receives the selection of a correction pattern to be applied by a user operation via the operation part 12.

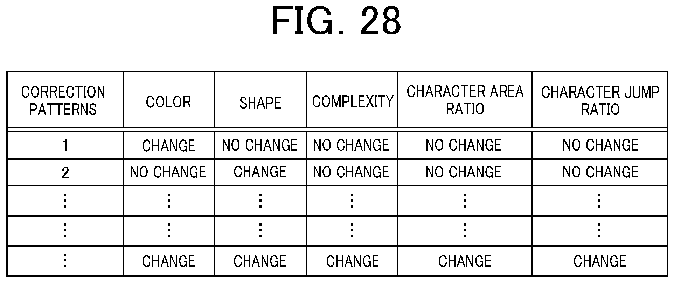

FIG. 28 illustrates an example of the correction patterns. In each correction pattern, it is determined whether to change which feature value (color, shape, complexity, character area ratio, and character jump ratio). For each correction pattern, a combination of feature values to be changed in correction is different. For example, correction pattern 1 corresponds to a corrected design draft in which only the "color" is changed and the other feature values are not changed. Correction pattern 2 corresponds to a corrected design draft in which only the "shape" is changed and the other feature values are not changed. Each correction pattern is stored in the storage section 15. Furthermore, for the correction patterns, in addition to the information on whether to change which feature value, information such as the direction in which each feature value is changed (to which direction each feature value is changed) and the degree to which each feature value is changed may also be prepared in advance.

Next, an operation will be described.

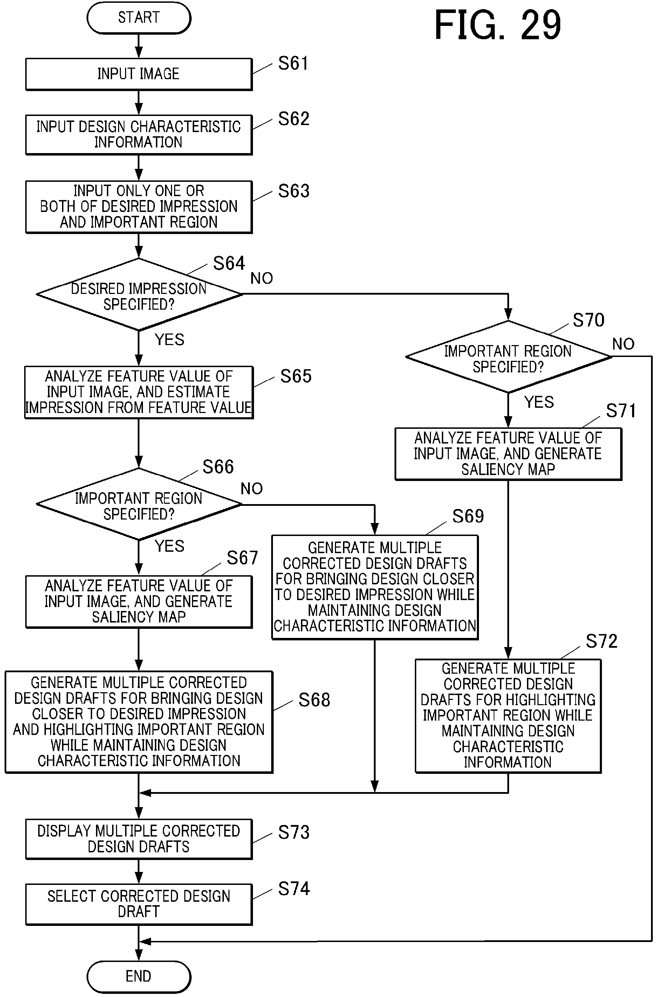

FIG. 29 is a flowchart illustrating a multiple correction candidates suggesting process executed by the information processing device 10 according to the third embodiment. This process is implemented by software processing in cooperation with the CPU of the controller 11 and the program stored in the storage section 15.

The processes in step S61 and step S62 are the same as the processes in step S1 and step S2 of the correction portion suggesting process (see FIG. 5), and thus a description thereof is omitted.

Next, the controller 11 receives an input of only one or both of a target impression (desired impression) for the input image and a region (important region) to be highlighted in the input image by a user operation via the operation part 12 (step S63).

Next, the controller 11 determines whether a desired impression has been specified as the purpose for the input image (step S64).

If a desired impression has been specified as the purpose for the input image (YES in step S64), the controller 11 analyzes the feature values of the input image and estimates, based on the impression correspondence table 151, an estimated impression of the input image from the feature values (step S65).

Next, the controller 11 determines whether an important region has been specified as the purpose for the input image (step S66).

If an important region is specified as the purpose for the input image (step S66; YES), the controller 11 analyzes the feature values of the input image and generates a saliency map from the feature values (step S67).

Next, the controller 11 generates a plurality of corrected design drafts, in accordance with a plurality of correction patterns, for bringing the input image closer to the desired impression and highlighting the important region of the input image while maintaining the design characteristic information on the input image (step S68).

In step S66, if an important region is not specified as the purpose for the input image (step S66; NO), the controller 11 generates a plurality of corrected design drafts, in accordance with a plurality of correction patterns, for bringing the input image closer to the desired impression while maintaining the design characteristic information on the input image (step S69).

In step S64, if a desired impression is not specified as the purpose for the input image (step S64; NO), the controller 11 determines whether an important region has been specified as the purpose for the input image (step S70).

If an important region is specified as the purpose for the input image (YES in step S70), the controller 11 analyzes the feature values of the input image and generates a saliency map from the feature values (step S71).

Next, the controller 11 generates a plurality of corrected design drafts, in accordance with a plurality of correction patterns, for highlighting the important region of the input image while maintaining the design characteristic information on the input image (step S72).

Note that not all the correction patterns are necessarily used in generating the plurality of corrected design drafts in step S68, step S69, and step S72. For example, as many correction patterns as can be easily compared by the user may be selected and used as appropriate.

After step S68, step S69, or step S72, the controller 11 causes the display part 13 to display the plurality of generated corrected design drafts (step S73). For example, the controller 11 causes the display part 13 to display the plurality of corrected design drafts corresponding to the respective modified patterns illustrated in FIG. 28.

Next, the controller 11 receives selection of a corrected design draft desired by the user from among the plurality of corrected design drafts displayed on the display part 13 by a user operation via the operation part 12 (step S74).

After step S74 or if an important region is not specified as the purpose for the input image in step S70 (step S70; NO), the controller 11 ends the multiple correction candidates suggesting process.

As described above, according to the third embodiment, similarly to the first embodiment and the second embodiment, it is possible to correct an image to suit a purpose without losing the characteristics of the design.

In addition, by presenting an image obtained by automatically correcting the design of the input image so as to bring the design of the input image to the purpose while maintaining the design characteristic information on the input image (that is, the presentation information includes a corrected design draft), it becomes easier to convey an image after correction to the user.

In addition, a plurality of images (corrected design drafts) can be generated under mutually different conditions in accordance with a plurality of correction patterns.

Furthermore, by presenting a plurality of images after correction and prompting the user to make a selection, the user does not need to manually correct the input image and can easily obtain a desired correction result for the input image.

The descriptions in the above embodiments are examples of the information processing program, the information processing device, and the information processing method according to the present invention, and the present invention is not limited thereto. The detailed configuration and detailed operation of each component constituting the device can also be appropriately changed without departing from the spirit of the present invention.

For example, characteristic processes in the respective embodiments may be combined.

Furthermore, in the first embodiment or the second embodiment, each of the suggested corrections (change recommendation parameters and change recommendation items) presented as the presentation information may be selectable by a user operation via the operation part 12, and the controller 11 of the information processing device 10 may automatically correct the input image in accordance with the suggested correction selected by the user and cause the display part 13 to display the image after correction.

Further, the programs for executing the respective processes may be stored in a portable recording medium. Further, a carrier wave may be applied as a medium for providing program data via a communication line.

Industrial Applicability

The information processing program, the information processing device, and the information processing method according to the present invention can be used in the technical field of evaluating and correcting a design image.

Reference Signs List

10 information processing device
11 controller
12 operation part
13 display part
14 communicator
15 storage section
20 input image
21 unchanging region specification screen
22 unchanging feature value specification screen
27 analysis result display screen
28 present evaluation display screen
29 change recommendation item display screen
40 input image
41 unchanging region specification screen
42 unchanging feature value specification screen
43 saliency map
44 important region specification screen
45 change recommendation item display screen
151 impression correspondence table

**Claims**

1.  An information processing program, causing a computer to execute:

    a design characteristic information input step of receiving an input of design characteristic information on a design of an input image;
    a purpose input step of receiving an input of a purpose for the input image;
    an analysis step of analyzing a feature value of the input image;
    a determination step of determining, based on the design characteristic information, an analysis result in the analysis step, and the purpose, presentation information for bringing the design of the input image closer to a design meeting the purpose while maintaining the design characteristic information; and
    an output step of outputting the presentation information.

2.  The information processing program according to claim 1, wherein the presentation information includes a suggested correction by a sentence or a corrected design draft.

3.  The information processing program according to claim 1 or 2, wherein

    the purpose input step includes receiving an input of a desired impression indicating an impression that is desired to be expressed in the design of the input image, and
    the determination step includes determining the presentation information based on the design characteristic information, the analysis result, and the desired impression.

4.  The information processing program according to claim 3, wherein the analysis step includes outputting an estimated impression obtained by estimating an impression given by the input image from the feature value of the input image as the analysis result based on correspondence information in which an impression given by an image is associated with a feature value of the image.

5. The information processing program according to claim 4, wherein the determination step includes determining the estimated impression or a matching degree between the estimated impression and the desired impression, and a feature value causing a difference between the estimated impression and the desired impression as the presentation information.

6. The information processing program according to claim 1 or 2, wherein

the purpose input step includes receiving an input of an important region indicating a position of a portion that is desired to be highlighted in the design of the input image,
the analysis step includes performing saliency mapping processing of quantifying a degree of saliency for each pixel of the input image, and
the determination step includes determining the presentation information based on the design characteristic information, a result of the saliency mapping processing, and the important region.

7. The information processing program according to claim 6, wherein

the analysis step includes, when the important region is a character string constituting a word or a sentence, calculating a ratio of a size of the character string to a size of a character string outside the important region, and
the determination step includes, when the calculated ratio is equal to or less than a predetermined value, determining the presentation information that is enlarging the character string in the important region or reducing the character string outside the important region.

8. An information processing device comprising:

design characteristic information input means for receiving an input of design characteristic information on a design of an input image;
purpose input means for receiving an input of a purpose for the input image;
analysis means for analyzing a feature value of the input image;
determination means for determining, based on the design characteristic information, an analysis result by the analysis means, and the purpose, presentation information for bringing the design of the input image closer to a design meeting the purpose while maintaining the design characteristic information; and
output means for outputting the presentation information.

9. An information processing method comprising:

a design characteristic information input step of receiving an input of design characteristic information on a design of an input image;
a purpose input step of receiving an input of a purpose for the input image;
an analysis step of analyzing a feature value of the input image;
a determination step of determining, based on the design characteristic information, an analysis result in the analysis step, and the purpose, presentation information for bringing the design of the input image closer to a design meeting the purpose while maintaining the design characteristic information; and
an output step of outputting the presentation information.

# FIG. 1

INFORMATION PROCESSING DEVICE

CONTROLLER 11

OPERATION PART 12

DISPLAY PART 13

COMMUNICATOR 14

STORAGE SECTION 15

IMPRESSION CORRESPONDENCE TABLE 151

10

# FIG. 2

151

| IMPRESSION WORDS | FEATURE VALUES | | | | | | | | |
|---|---|---|---|---|---|---|---|---|---|
| | COLOR 1 | | | COLOR 2 | | | COLOR 3 | | |
| | R GRADATION VALUE | G GRADATION VALUE | B GRADATION VALUE | R GRADATION VALUE | G GRADATION VALUE | B GRADATION VALUE | R GRADATION VALUE | G GRADATION VALUE | B GRADATION VALUE |
| HOMEY | R101 | G101 | B101 | R102 | G102 | B102 | R103 | G103 | B103 |
| RELAXED | R201 | G201 | B201 | R202 | G202 | B202 | R203 | G203 | B203 |
| ACTIVE | R301 | G301 | B301 | R302 | G302 | B302 | R303 | G303 | B303 |
| ⋮ | ⋮ | ⋮ | ⋮ | ⋮ | ⋮ | ⋮ | ⋮ | ⋮ | ⋮ |
| ⋮ | ⋮ | ⋮ | ⋮ | ⋮ | ⋮ | ⋮ | ⋮ | ⋮ | ⋮ |

# FIG. 3

# FIG. 4

| (R11, G11, B11) | (R12, G12, B12) | ⋯ | (R1n, G1n, B1n) |
|---|---|---|---|
| (R21, G21, B21) | (R22, G22, B22) | ⋯ | (R2n, G2n, B2n) |
| ⋮ | ⋮ | ⋮ | ⋮ |
| ⋮ | ⋮ | ⋮ | ⋮ |
| (Rm1, Gm1, Bm1) | (Rm2, Gm2, Bm2) | ⋯ | (Rmn Gmn, Bmn) |

# FIG. 5

START

INPUT IMAGE — S1

INPUT DESIGN CHARACTERISTIC INFORMATION — S2

INPUT TARGET EVALUATION ITEM
FOR INPUT IMAGE — S3

ASSIGN SERIAL NUMBERS 1 TO k TO
EVALUATION ITEMS — S4

EVALUATION ITEM NUMBER K = k — S5

S6
K=0 ?    YES → END

NO

SELECT REGION
TO BE EVALUATED IN INPUT IMAGE — S7

ANALYZE FEATURE VALUE OF INPUT IMAGE — S8

DETERMINE PRESENTATION INFORMATION
FOR BRINGING DESIGN OF INPUT IMAGE CLOSER
TO PURPOSE OF EVALUATION ITEM
WHILE MAINTAINING DESIGN CHARACTERISTIC
INFORMATION ON INPUT IMAGE — S9

DISPLAY PRESENTATION INFORMATION — S10

K=K−1 — S11

# FIG. 6

START

INPUT IMAGE — S21

INPUT REGION A AND FEATURE VALUE a
NOT DESIRED TO BE CHANGED — S22

INPUT TARGET IMPRESSION
(DESIRED IMPRESSION) — S23

SELECT REGION
TO BE EVALUATED IN INPUT IMAGE — S24

ANALYZE FEATURE VALUE OF INPUT IMAGE,
AND DISPLAY FEATURE VALUE — S25

ESTIMATE IMPRESSION FROM FEATURE VALUE — S26

DISPLAY
ESTIMATED IMPRESSION OF INPUT IMAGE — S27

DISPLAY DESIRED IMPRESSION
AND MATCHING DEGREE BETWEEN ESTIMATED
IMPRESSION AND DESIRED IMPRESSION — S28

DISPLYAY FEATURE VALUE
OTHER THAN FEATURE VALUE a IN REGION A
THAT IS TO BE CHANGED TO BRING DESIGN
CLOSER TO DESIRED IMPRESSION — S29

END

# FIG. 7

# FIG. 8

# FIG. 9

SELECT FEATURE VALUE a THAT YOU DO NOT WANT TO CHANGE IN REGION A.

☑ COLOR  ☐ SHAPE  ☐ COMPLEXITY/MARGIN RATIO

☐ CHARACTER AREA RATIO  ☐ CHARACTER JUMP RATIO

# FIG. 10

# FIG. 11A

DOMINANT COLOR ANALYSIS RESULT

| 2.51% | | #078A51 |
|---|---|---|
| 3.9% | | #878085 |
| 6.32% | | #821B24 |
| 7.59% | | #D5995F |
| 8.84% | | #C1DFF0 |
| 9.05% | | #CF0203 |
| 24.77% | | #9E5E2D |
| 37.02% | | #8BBEDE |

241

242

# FIG. 11B

COMPLEXITY ANALYSIS RESULT

COMPLEXITY = 60%

252   251

# FIG. 11C

CHARACTER AREA RATIO
ANALYSIS RESULT

263

261

262

CHARACTER AREA RATIO: 10.5%

264

# FIG. 12

27

ANALYSIS RESULT OF
ESTIMATED IMPRESSION OF INPUT IMAGE

"ACTIVE"          50%

"WILD"          50%

# FIG. 13

28

DESIRED IMPRESSION: "HOMEY"          281

282

MATCHING DEGREE
BETWEEN ESTIMATED IMPRESSION OF INPUT IMAGE AND DESIRED IMPRESSION

"HOMEY"

△ 35%

# FIG. 14

PARAMETERS RECOMMENDED TO BE CHANGED

1. COLOR ‒‒‒ CHANGE COLOR OF PORTION SURROUNDED BY BROKEN LINE TO BE CLOSER TO COLOR ARRANGEMENT SHOWN BELOW

2. CHARACTER AREA RATIO ‒‒‒ REDUCE CHARACTER AREA RATIO TO LESS THAN 10%

# FIG. 15

# FIG. 16

31

ANALYSIS RESULT OF
ESTIMATED IMPRESSION OF IMAGE AFTER CORRECTION

"HOMEY"          65%

"RELAXED"        35%

# FIG. 17

32

DESIRED IMPRESSION: "HOMEY"        321

322

MATCHING DEGREE
BETWEEN ESTIMATED IMPRESSION OF IMAGE AFTER CORRECTION AND DESIRED IMPRESSION

△ 65%          "HOMEY"

# FIG. 18

```
        ┌─────────────┐
        │    START    │
        └──────┬──────┘
               │
        ┌──────▼──────────┐
        │   INPUT IMAGE   │ ── S31
        └──────┬──────────┘
               │
        ┌──────▼──────────────┐
        │    INPUT REGION A   │ ── S32
        │  AND FEATURE VALUE a │
        │ NOT DESIRED TO BE CHANGED │
        └──────┬──────────────┘
               │
        ┌──────▼──────────────┐
        │      ANALYZE        │ ── S33
        │ FEATURE VALUE OF INPUT IMAGE, │
        │ AND GENERATE SALIENCY MAP │
        └──────┬──────────────┘
               │
        ┌──────▼──────────────┐
        │   INPUT REGION B    │ ── S34
        │ (IMPORTANT REGION) TO BE │
        │     HIGHLIGHTED     │
        └──────┬──────────────┘
               │
        ┌──────▼──────────────┐
       ╱ AT LEAST PORTION OF REGION ╲ ── S35   YES
      ⟨  A INCLUDED IN REGION B?    ⟩ ──────────┐
       ╲                            ╱           │
        └──────┬──────────────┘                 │
               │ NO                             │
        ┌──────▼──────────────┐ ── S36   ┌──────▼──────────────┐ ── S37
        │  DISPLAY CHANGE     │          │   DISPLAY CHANGE    │
        │ RECOMMENDATION ITEM TO │       │ RECOMMENDATION ITEM │
        │  HIGHLIGHT REGION B  │         │ TO HIGHLIGHT REGION B │
        └──────┬──────────────┘          │ WITH FEATURE VALUE OTHER │
               │                         │  THAN FEATURE VALUE a │
               │                         └──────┬──────────────┘
               │◄───────────────────────────────┘
        ┌──────▼──────┐
        │     END     │
        └─────────────┘
```

# FIG. 19

40

# FIG. 20

41

A

A

# FIG. 21

42

SELECT FEATURE VALUE a THAT YOU DO NOT WANT TO CHANGE IN REGION A.

☑ COLOR  ☐ SHAPE  ☐ COMPLEXITY/MARGIN RATIO

☐ CHARACTER AREA RATIO  ☐ CHARACTER JUMP RATIO

# FIG. 22

43

# FIG. 23

# FIG. 24

CHANGE RECOMMENDATION ITEMS

MAKE SURROUNDING OF REGION B BRIGHTER.

REDUCE WRITING AMOUNT (COMPLEXITY) AROUND REGION B.

## FIG. 25

46

## FIG. 26

47

B

# FIG. 27

START

INPUT IMAGE — S41

INPUT REGION A
AND FEATURE VALUE a
NOT DESIRED TO BE CHANGED — S42

ANALYZE
FEATURE VALUE OF INPUT IMAGE,
AND GENERATE SALIENCY MAP — S43

INPUT REGION B
(IMPORTANT REGION) TO BE
HIGHLIGHTED — S44

REGION B
= CHARACTER STRING? — S45 — NO

YES

CALCULATE JUMP RATIO OF
CHARACTER STRING
IN REGION B TO CHARACTER
STRING OUTSIDE REGION B — S46

JUMP RATIO
EQUAL TO OR LESS
THAN PREDETERMINED
VALUE? — S47 — NO

YES

AT LEAST
PORTION OF REGION A
INCLUDED IN REGION B? — S48 — NO

YES

FEATURE VALUE a
= JUMP RATIO? — S49 — YES

NO

DISPLAY THAT ENLARGING
CHARACTER STRING IN REGION B
OR REDUCING CHARACTER STRING
OUTSIDE REGION B — S50

AT LEAST
PORTION OF REGION A
INCLUDED IN REGION B? — S51 — YES

NO

DISPLAY CHANGE
RECOMMENDATION ITEM
TO HIGHLIGHT REGION B — S52

DISPLAY CHANGE
RECOMMENDATION ITEM TO
HIGHLIGHT REGION B
WITH FEATURE VALUE
OTHER THAN FEATURE VALUE a — S53

END

# FIG. 28

| CORRECTION PATTERNS | COLOR | SHAPE | COMPLEXITY | CHARACTER AREA RATIO | CHARACTER JUMP RATIO |
|---|---|---|---|---|---|
| 1 | CHANGE | NO CHANGE | NO CHANGE | NO CHANGE | NO CHANGE |
| 2 | NO CHANGE | CHANGE | NO CHANGE | NO CHANGE | NO CHANGE |
| ⋮ | ⋮ | ⋮ | ⋮ | ⋮ | ⋮ |
| ⋮ | ⋮ | ⋮ | ⋮ | ⋮ | ⋮ |
| ⋮ | CHANGE | CHANGE | CHANGE | CHANGE | CHANGE |

# FIG. 29

```
          START
            │
            ▼
    ┌──────────────────┐
    │   INPUT IMAGE    │── S61
    └──────────────────┘
            │
            ▼
    ┌──────────────────┐
    │ INPUT DESIGN     │── S62
    │ CHARACTERISTIC   │
    │ INFORMATION      │
    └──────────────────┘
            │
            ▼
    ┌──────────────────┐
    │ INPUT ONLY ONE OR│── S63
    │ BOTH OF DESIRED  │
    │ IMPRESSION AND   │
    │ IMPORTANT REGION │
    └──────────────────┘
            │
            ▼
```

S64 DESIRED IMPRESSION SPECIFIED? — NO → S70 IMPORTANT REGION SPECIFIED? — NO

YES (S64) ↓

ANALYZE FEATURE VALUE OF INPUT IMAGE, AND ESTIMATE IMPRESSION FROM FEATURE VALUE — S65

S66 IMPORTANT REGION SPECIFIED? — NO → S69 GENERATE MULTIPLE CORRECTED DESIGN DRAFTS FOR BRINGING DESIGN CLOSER TO DESIRED IMPRESSION WHILE MAINTAINING DESIGN CHARACTERISTIC INFORMATION

YES (S66) ↓

ANALYZE FEATURE VALUE OF INPUT IMAGE, AND GENERATE SALIENCY MAP — S67

GENERATE MULTIPLE CORRECTED DESIGN DRAFTS FOR BRINGING DESIGN CLOSER TO DESIRED IMPRESSION AND HIGHLIGHTING IMPORTANT REGION WHILE MAINTAINING DESIGN CHARACTERISTIC INFORMATION — S68

YES (S70) ↓

ANALYZE FEATURE VALUE OF INPUT IMAGE, AND GENERATE SALIENCY MAP — S71

GENERATE MULTIPLE CORRECTED DESIGN DRAFTS FOR HIGHLIGHTING IMPORTANT REGION WHILE MAINTAINING DESIGN CHARACTERISTIC INFORMATION — S72

DISPLAY MULTIPLE CORRECTED DESIGN DRAFTS — S73

SELECT CORRECTED DESIGN DRAFT — S74

END

# EP 4 557 224 A1

| INTERNATIONAL SEARCH REPORT | International application No. |
|---|---|
| | **PCT/JP2023/022882** |

**A.    CLASSIFICATION OF SUBJECT MATTER**

*G06T 11/60*(2006.01)i; *G06T 7/00*(2017.01)i
FI:    G06T11/60 100A; G06T7/00 130

According to International Patent Classification (IPC) or to both national classification and IPC

**B.    FIELDS SEARCHED**

Minimum documentation searched (classification system followed by classification symbols)

G06T11/60; G06T7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2017-091310 A (FUJI XEROX CO., LTD.) 25 May 2017 (2017-05-25) paragraphs [0037]-[0083], fig. 1-17 | 1-6, 8-9 |
| A | | 7 |
| Y | WO 2017/119124 A1 (GLAD CUBE INC.) 13 July 2017 (2017-07-13) paragraph [0056], fig. 15 | 1-6, 8-9 |
| A | | 7 |
| Y | JP 2007-280050 A (FUJI XEROX CO., LTD.) 25 October 2007 (2007-10-25) paragraph [0078], fig. 19 | 4-5 |
| A | | 7 |
| Y | JP 2014-167673 A (DAINIPPON PRINTING CO., LTD.) 11 September 2014 (2014-09-11) paragraphs [0030]-[0050], fig. 1-6 | 6 |
| A | | 7 |
| A | JP 2022-049110 A (FUJIFILM BUSINESS INNOVATION CORP.) 29 March 2022 (2022-03-29) entire text, all drawings | 1-9 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 August 2023** | **12 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

36

**INTERNATIONAL SEARCH REPORT**

| International application No. |
| --- |
| **PCT/JP2023/022882** |

**C.     DOCUMENTS CONSIDERED TO BE RELEVANT**

| Category* | Citation of document, with indication, where appropriate, of the relevant passages | Relevant to claim No. |
| --- | --- | --- |
| A | JP 2018-010509 A (RICOH CO., LTD.) 18 January 2018 (2018-01-18)<br>entire text, all drawings | 1-9 |
| A | JP 2005-165437 A (KYOCERA MITA CORP.) 23 June 2005 (2005-06-23)<br>entire text, all drawings | 1-9 |

Form PCT/ISA/210 (second sheet) (January 2015)

**INTERNATIONAL SEARCH REPORT**
Information on patent family members

International application No.

**PCT/JP2023/022882**

| Patent document cited in search report | | | Publication date (day/month/year) | Patent family member(s) | Publication date (day/month/year) |
|---|---|---|---|---|---|
| JP | 2017-091310 | A | 25 May 2017 | (Family: none) | |
| WO | 2017/119124 | A1 | 13 July 2017 | KR 10-2017-0137844 A | |
| JP | 2007-280050 | A | 25 October 2007 | (Family: none) | |
| JP | 2014-167673 | A | 11 September 2014 | (Family: none) | |
| JP | 2022-049110 | A | 29 March 2022 | (Family: none) | |
| JP | 2018-010509 | A | 18 January 2018 | (Family: none) | |
| JP | 2005-165437 | A | 23 June 2005 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017091310 A